# EUROPÄISCHE PATENTSCHRIFT

(11) **EP 2 955 514 B1**
(45) Veröffentlichungstag und Bekanntmachung des Hinweises auf die Patenterteilung: **09.01.2019**
(21) Anmeldenummer: 14172219.9
(22) Anmeldetag: 12.06.2014
(51) Int. Cl.: G01N 27/84

(54) **Vorrichtung und Verfahren zur zerstörungsfreien Prüfung metallischer Werkstücke**
Device and method for the non-destructive testing of metallic workpieces
Dispositif et méthode destinés à la vérification non destructive de pièces à usiner métalliques

(43) Veröffentlichungstag der Anmeldung: 16.12.2015
(73) Patentinhaber: Helling GmbH, 25436 Heidgraben (DE)
(72) Erfinder: Riess, Nathanael, 25436 Heidgraben (DE)
(74) Vertreter: Meyer, Ludgerus

(56) Entgegenhaltungen:
- CN-U- 201 903 531
- DE-A1-102008 016 255
- JP-A- H07 253 412
- JP-A- H11 160 284
- JP-A- 2006 292 607
- US-A- 3 876 932
- Helling GmbH: "Cross shaped coil", , 31. Januar 2013 (2013-01-31), XP055134074, Gefunden im Internet: URL:http://www.helling-ndt.de/media/transf er/account/4c6d5a9c-dd5c-4569-bdb1-06a41a2 5c659/doc/cross_shaped_coil_flyer.pdf [gefunden am 2014-08-08]
- Daniel Cetnik ET AL: "HC1-500 MOUNTING TABLE VIEW (TOP-DOWN) SHOWING MOUNTING POINTS", , 12 March 2014 (2014-03-12), XP055444148, Retrieved from the Internet: URL:http://www.bartingtondefenceandspace.c om/LiteraturePDF/drawings/helmholtz/DR3205 .pdf [retrieved on 2018-01-24]
- YU C ET AL: "Novel electromagnetic actuation system for three-dimensional locomotion and drilling of intravascular microrobot", SENSORS AND ACTUATORS A: PHYSICAL, ELSEVIER BV, NL, vol. 161, no. 1-2, 1 June 2010 (2010-06-01), pages 297-304, XP027120732, ISSN: 0924-4247 [retrieved on 2010-06-01]

## Beschreibung

Die Erfindung betrifft eine Vorrichtung zur zerstörungsfreien Prüfung metallischer Werkstücke auf Oberflächenfehler mittels eines Magnetpulververfahrens nach dem Oberbegriff des Anspruchs 1.

Die Erfindung betrifft auch ein Verfahren zur zerstörungsfreien Prüfung metallischer Werkstücke auf Oberflächenfehler gemäß Anspruch 8.

Bei der zerstörungsfreien Prüfung metallischer Werkstücke können unterschiedliche Prüfverfahren zum Einsatz kommen. Neben einer Rissfehlerprüfung durch ein Farbeindringverfahren findet hierfür insbesondere das Magnetpulververfahren Anwendung, bei dem zunächst das Werkstück mittels eines starken magnetischen Feldes magnetisiert wird. Anschließend wird ein Magnetpulver auf die Oberfläche des Werkstücks aufgebracht und die resultierende Verteilung des Magnetpulvers ermittelt. Bei diesem Verfahren können Risse im Werkstück, die sich an der Oberfläche befinden oder unmittelbar darunter liegen, festgestellt werden, die mit bloßem Auge nicht oder nur schwer zu erkennen sind.

Das Magnetpulververfahren ist grundsätzlich seit mehreren Jahrzehnten bekannt und wird insbesondere bei gewalzten oder verschweißten Werkstücken sowie großen Federn und Rohren eingesetzt. Auch andere im Betrieb stark beanspruchte Teile, wie Turbinenschaufeln, Wellen, Radsätze von Eisenbahnen oder andere längliche Metallstangen oder -rohre, müssen nach Ablauf von festgelegten Prüfungszeiträumen immer wieder untersucht werden, denn bei entstandenen oder bereits ursprünglich vorhandenen Rissen kann ein Bruch derartiger Bauteile zu erheblichen Schäden führen.

Die Ausbildung eines Magnetfeldes kann entweder mittels Stromdurchflutung über ein an das Werkstück angelegtes Joch oder mit einer Felddurchflutung berührungslos mittels stromdurchflossener Spulen erfolgen, die relativ nah an dem Werkstück angeordnet sind und magnetische Feldlinien in dem Werkstück hervorrufen. Die Erkennbarkeit von Rissen im Werkstück ist am größten, wenn die Längserstreckung der Risse mehr oder weniger senkrecht zum Magnetfeld verläuft. Der durch das Magnetfeld an der Stelle eines Risses erzeugte Streufluss führt zu einer Anlagerung und Anhäufung des Magnetpulvers und lässt damit den Riss in Erscheinung treten. Zur besseren Erkennbarkeit des Magnetpulvers kann es mit fluoreszierenden Stoffen versetzt werden, so dass das Magnetpulver sich bei UV-Bestrahlung deutlich vom Untergrund abhebt und damit die Risse verdeutlicht.

Die bei der Felddurchflutung eines Werkstücks verwendete Spulenform hat erheblichen Einfluss auf die Erkennbarkeit von Fehlern im Werkstück. Es besteht das Bestreben, möglichst alle Fehler auf der Oberfläche eines Werkstücks in einem Arbeitsgang zu erfassen und insbesondere gleichzeitig Längs- und Querfehler festzustellen.

Um einen zylindrischen Metallkörper allseitig überprüfen zu können, wird das Werkstück während der Prüfung in der Regel um die Längsachse gedreht, was auch schraubenförmig möglich ist, indem das Werkstück unter Drehung langsam in Richtung der Längsachse vorwärtsbewegt wird.

In der DE 38 02 575 C2 sind ein Verfahren und eine Einrichtung zur Magnetpulverprüfung beschrieben, wobei das Werkstück zur gleichzeitigen und aufeinanderfolgenden Längs- und Querfehlerfeststellung in kontinuierlichem Durchlauf berührungslos in Axialrichtung zweier Längsschenkel einer gestreckten Spule mit an ihren Schmalseiten abgekröpften Enden in Längsrichtung der Spule durch diese hindurchgeführt wird. Die Spule bildet dadurch die Form einer Sattelspule. Beim Durchlauf des Werkstücks durch die Spule und dessen Drehung während des Durchlaufs werden Fehlstellen an der Oberfläche des Werkstücks im Wesentlichen vollständig erfasst.

Bei einem aus der DE 29 39 372 C2 bekannten Verfahren erfolgt der Aufbau eines Magnetfelds einerseits durch Felddurchflutung mittels einer Spule und andererseits mittels Stromdurchflutung über ein angelegtes Joch. Der arbeits- und apparative Aufwand zur Erzeugung zweier unterschiedlicher Durchflutungen ist jedoch erheblich höher als bei einer reinen Felddurchflutung.

In dem Dokument "Cross shaped coil" (Helling GmbH, 31. Januar 2013) sind auch ein Verfahren und eine Einrichtung zur zerstörungsfreien Prüfung metallischer Werkstücke bekannt. Bei dieser Technologie ist es nötig, Werkstücke während der Messung zu drehen.

In der CN 201 903 531 U handelt es sich hierbei um eine Art von Jochmagnetisierung, wobei das Werkstück nicht durch Spulen hindurchgeführt wird.

Zur Prüfung von Endbereichen von ferromagnetischen hohlzylindrischen Werkstücken, insbesondere Rohren, ist es auch bekannt, den stromführenden Leiter in der Mantelfläche einer hohlzylindrischen Spule anzuordnen, wobei die Spule zur Magnetisierung in das hohlzylindrische Werkstück eingebracht wird und in relative Drehung gegenüber dem Rohr gebracht wird.

Zylindrische Bauelemente, deren Quererstreckung gegenüber ihrer Längserstreckung relativ klein ist, können auch über um das Werkstück gelegte Spulen von einem Magnetfeld durchflutet werden. Um dabei sowohl Quer- als auch Längsfehler erfassen zu können, ist es bekannt, zwei um 90° gegeneinander versetzte sich kreuzende Spulen zu verwenden (sogenannte Kreuzspulen), durch die ein Magnetfeld erzeugt wird, das beim Durchfahren des Werkstücks durch die Kreuzspule sowohl Längs- als auch Querfehler erkennen lässt.

Die kreuzförmige Anordnung führt jedoch dazu, dass Magnetfelder im jeweiligen Kreuzungsbereich der Spulen senkrecht zum Werkstück stehen, so dass in diesen Bereichen nur eine ungenügende Fehlerfeststellung erfolgen kann. Um in diesem Bereich gleichwohl vorhandene Fehler feststellen zu können, werden die Werkstücke bei ihrem Durchlauf durch die Kreuzspule in der Praxis daher entweder gedreht oder in mehreren Läufen durch die Kreuzspule hindurchgeführt, wobei sie jeweils um einen 90°-Winkel um ihre Achse gedreht sind.

Der Erfindung liegt daher die Aufgabe zugrunde, eine Vorrichtung zur zerstörungsfreien Prüfung metallischer Werkstücke auf Oberflächenfehler mittels des Magnetpulververfahrens anzugeben, mit deren Hilfe das Werkstück auf Längs- oder Querfehler untersucht werden kann, ohne dass das Werkstück die das Magnetfeld erzeugenden Spulen mehrfach durchlaufen muss oder während der Prüfung gedreht werden muss.

Diese Aufgabe wird durch die im Anspruch 1 angegebene Erfindung gelöst. Vorteilhafte Weiterbildungen der Erfindung sind in Unteransprüchen angegeben.

Gemäß der Erfindung wird die Kreuzspulenanordnung durch eine dritte Spule ergänzt, die mit ihrer Achsrichtung normal zur Ebene der ersten und zweiten Spule der Kreuzspule verläuft, wobei das Werkstück beim Durchlauf durch die Spulenanordnung im Wesentlichen parallel zur Ebene zur dritten Spule geführt wird.

Die erfindungsgemäße dritte Spule beeinflusst das Magnetfeld, das durch die ersten und zweiten Spulen erzeugt wird in einer Weise, dass beim Durchlaufen eines Werkstücks durch die Spulenanordnung jede Oberflächenstelle des Werkstücks durch Magnetfeldkomponenten erreicht werden kann, die sowohl Längs- als auch Querfehler feststellen lassen.

Die dritte Spule ist in eine erste und zweite Teilspule aufgeteilt, wobei die beiden Teilspulen mit einem solchen Abstand parallel zueinander angeordnet sind, dass ein Werkstück durch eine lichte Öffnung der kreuzförmig angeordneten ersten und zweiten Spulen und gleichzeitig zwischen den Teilspulen hindurchführbar ist.

Die Teilspulen sind vorzugsweise in Reihe mit gleichgerichtetem Magnetfeld verschaltet. Die dritte Spule erzeugt damit ein sehr homogenes Magnetfeld, das sich den Magnetfeldern der Kreuzspule überlagert.

Die Magnetisierung der Spulenvorrichtung kann sowohl durch Gleichstrom als auch durch Wechselstrom bzw. Drehstrom erfolgen. Drehstrom lässt sich leichter transformieren, aber Gleichstrom hat den Vorteil der Vermeidung des Skineffekts. Vorzugsweise werden bei der Erfindung die kreuzförmig angeordneten ersten und zweiten Spulen mittels Drehstrom betrieben, während die dritte Spule mit Drehstrom oder Gleichstrom versorgt wird. Bei Anregung der ersten und zweiten Spulen mittels Drehstrom ergibt sich dort ein rotierendes Feld bei einer Phasenverschiebung von 90°, das eine kreisförmige Form aufweist. Wenn die dritte Spule ebenfalls mit Drehstrom betrieben wird, lassen sich die erforderlichen hohen Phasenströme leicht ausgleichen und relativ einfach aufgebaute Drehstromtransformatoren verwenden. Außerdem lässt sich damit die Zahl der stromführenden Leiter reduzieren und damit die Wärmeverluste verringern.

Die erfindungsgemäße Spulenanordnung erzeugt gleichzeitig Magnetfelder in allen Richtungen, so dass Oberflächenfehler des metallischen Werkstücks in allen Richtungen zur Anzeige kommen können.

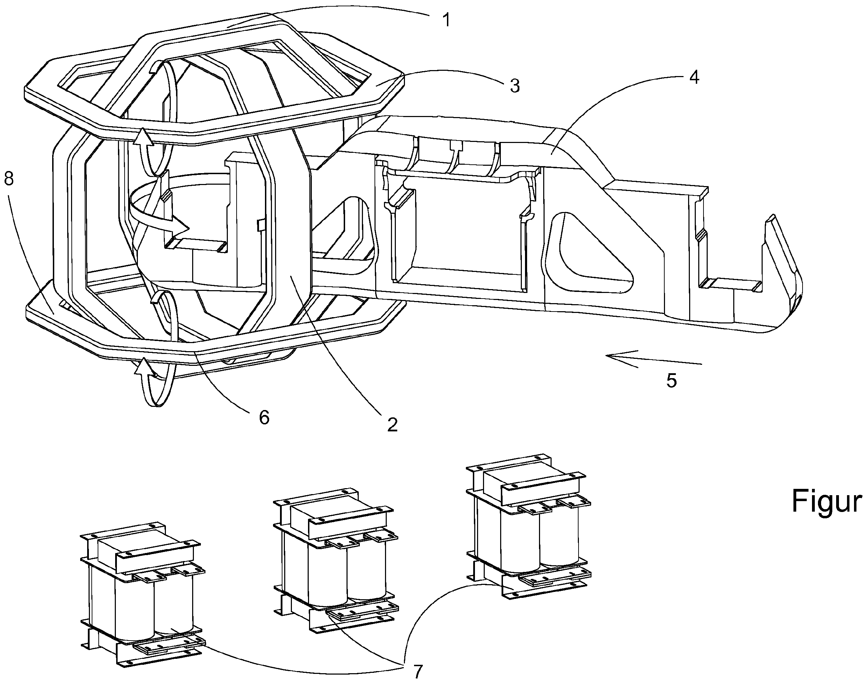

Die Erfindung wird nachstehend anhand eines Ausführungsbeispiels näher erläutert. Die einzige Figur zeigt eine Spulenanordnung mit einer Kreuzspule, die zwei um 90° zueinander versetzte Spulen 1 und 2 enthält. Die beiden Spulen 1 und 2 sind ineinander verschachtelt und weisen vorzugsweise jeweils 6 Windungen auf. Die freien Fenster zwischen den Spulen sind so groß, dass ein Werkstück 4 in Richtung 5 durch die Kreuzspule hindurchgeführt werden kann.

Die in der Figur dargestellte dritte Spule 3 verläuft mit ihrer Achse senkrecht zur Achsrichtung der beiden Spulen 1 und 2. Die beiden Spulen 3 und 6 enthalten jeweils 1 - 3, vorzugsweise jeweils 3 Windungen. Sie bilden in guter Näherung sogenannte Helmholzspulen und verlaufen parallel zueinander. Sie sind elektrisch in Reihe geschaltet.

Die Spulen 1 und 2 werden an je eine Phase eines Drehstromtransformators 7 angeschlossen, während die Teilspulen in Reihe an der dritten Phase des Transformators angeschlossen sind.

Bei ausreichender Größe der verwendeten Spulen und den damit erzeugten ausreichend großen Magnetfeldern können auch große Werkstücke 4, wie Traggestelle von Eisenbahnwaggons, Turbinenwellen und andere großformatige zylindrische Elemente, geprüft werden, wobei alle Oberflächenfehler bei einem einzigen Durchlauf des Werkstücks durch die Spulen erfasst werden können.

Die zur Erfassung der Oberflächenfehler erforderlichen Besprüheinrichtungen zur Aufbringung des Magnetpulvers auf die Oberfläche der Werkstücke sowie die Bestrahlung mittels UV-Licht zur Feststellung der resultierenden Magnetpulveranhäufungen auf der Oberfläche des Werkstücks sind an sich bekannt und in der Zeichnung nicht dargestellt.

Die Form der Spulen ist nicht auf die dargestellte achteckige Form beschränkt, sondern kann insbesondere auch rund gewählt werden, wobei die Verwendung der achteckigen Form Fertigungsvorteile bietet. Es ist jedem Falle erwünscht, das Durchlauffenster für das Werkstück 4 möglichst groß zu halten. Sofern nur relativ flache Werkstücke mit kleiner Querausdehnung zu prüfen sind, deren Erstreckung in einer Richtung erheblich größer ist als in einer anderen Richtung, kann die Spulenform auch entsprechend angepasst werden und z. B. eine ovale oder rechteckige Form erhalten.

Das Werkstück 4 ist nicht Teil der Erfindung, sondern nur beispielhaft dargestellt, um die Form eines Werkstücks, das mit der erfindungsgemäßen Vorrichtung geprüft werden kann, zu verdeutlichen.

Um eine möglichst deutliche Anzeige von Oberflächenrissen zu erhalten, ist es allgemein gewünscht, Feldstärke von wenigstens 20 Ampere/cm an der Oberfläche zu erreichen. Bei einer Ausbildung der dritten Spule in Form von zwei Teilspulen mit einem Abstand von 45 cm zueinander, unter Verwendung von sechs Windungen für beide Spulen zusammen, und einem jeweiligen Radius von etwa 40 cm für alle Spulen war es ausreichend, einen Strom von etwa 1400 Ampere durch jede Spule zu führen, um die angegebene Feldstärke zu erreichen.

Die Teilspulen können auf der Außenseite oder der Innenseite des Kreuzungsbereichs der Kreuzspule angeordnet sein. Wenn sie auf der Außenseite angeordnet sind, können sie einen größeren Durchmesser aufweisen, der so groß sein kann, dass die Teilspulen axial zueinander bewegt werden können, um näher an flache Werkstücke herankommen zu können. Auch bei Anordnung im Inneren der Kreuzspule lässt sich der Abstand der Teilspulen zueinander entsprechend ändern. Die Spulenwindungen können selbsttragend sein, aber es wird bevorzugt, sie jeweils in einem stabilen achteckig geformten nichtmagnetischen Kanal 8 unterzubringen, der zur besseren Lüftung wenigstens außenseitig offen ist.

Da die Prüfobjekte bei der Magnetpulverprüfung in der Regel bis in die Sättigungsmagnetisierung gefahren werden, bleibt für die Prüfobjekte auch nach Abschalten eines mit Gleichstrom erzeugten Magnetfelds eine Remanenz-Magnetisierung bestehen. Diese lässt sich durch ein nach der Prüfung auf das Prüfobjekt aufgebrachtes magnetisches Wechselfeld eliminieren, das mehrere Sekunden lang mit abschwächendem Strom auf das Werkstück aufgebracht wird.

In einem ausgeführten Beispiel konnten Werkstücke mit einer Quererstreckung von mehr als 60 cm und einer Länge von mehr als 2 m geprüft werden.

### Bezugszeichen

- 1: erste Spule
- 2: zweite Spule
- 3: erste Teilspule
- 4: Werkstück
- 5: Laufrichtung
- 6: zweite Teilspule
- 7: Transformator
- 8: Träger

## Patentansprüche

1. Vorrichtung zur zerstörungsfreien Prüfung metallischer Werkstücke auf Oberflächenfehler mittels eines Magnetpulververfahrens, bei dem auf die Oberfläche des Werkstücks (4) ein magnetpulverhaltiges Mittel aufgebracht und bei einer Magnetisierung des Werkstücks mittels elektrischer Spulen (1, 2) die Verteilung des Magnetpulvers an Fehlstellen des Werkstücks ermittelt wird, wobei die im Winkel von 90° in ihrer Achsebene zueinander stehenden ersten und zweiten Spulen (1, 2) das Werkstück jeweils ringförmig umschließen und die Magnetisierung hervorrufen, und wobei die Achsrichtungen der Spulen in Bezug auf die Laufrichtung (5) des die Spulen durchlaufenden Werkstücks jeweils in einem Winkel von 45° verlaufen und eine dritte Spule mit ihrer Achsrichtung normal zur Ebene der Achsen der ersten und zweiten Spulen (1, 2) verläuft, wobei die dritte Spule in eine erste (3) und zweite (6) Teilspule aufgeteilt ist, welche mit einem Abstand parallel zueinander angeordnet sind, so dass ein Werkstück durch eine lichte Öffnung der kreuzförmig ineinander verschachtelten ersten und zweiten Spulen (1, 2) und zwischen den beiden parallel zueinander angeordneten Teilspulen (3, 6) hindurchführbar ist, und wobei die ersten und zweiten Spulen (1, 2) je an eine Phase eines Drehstromtransformators (7) angeschlossen sind und die Teilspulen (3, 6) in Reihe an der dritten Phase des Transformators angeschlossen sind.

2. Vorrichtung nach Anspruch 1, **dadurch gekennzeichnet, dass** die Spulen jeweils eine achteckige oder kreisförmige Form aufweisen.

3. Vorrichtung nach Anspruch 2, **dadurch gekennzeichnet, dass** die ersten und zweiten Teilspulen (3, 6) jeweils ein bis drei Windungen enthalten.

4. Vorrichtung nach Anspruch 1, **dadurch gekennzeichnet, dass** die ersten und zweiten Teilspulen jeweils den Kreuzungsbereich der ersten und zweiten Spulen von der Außen- oder der Innenseite überdecken.

5. Vorrichtung nach einem oder mehreren der vorhergehenden Ansprüche, **dadurch gekennzeichnet, dass** der lichte Durchmesser der ersten und zweiten Teilspulen so groß gewählt ist, dass die Teilspulen (3, 6) in ihrer Achsrichtung über die ersten und zweiten Teilspulen bewegt werden können und damit bei relativ flachen zu prüfenden Werkstücken (4) bis nahe an die Oberfläche des Werkstücks geführt werden können.

6. Vorrichtung nach Anspruch 1, **dadurch gekennzeichnet, dass** die kreuzförmig angeordneten ersten und zweiten Spulen (1, 2) in ihrer Achsrichtung zueinander bewegbar sind.

7. Vorrichtung nach einem oder mehreren der vorhergehenden Ansprüche, **dadurch gekennzeichnet, dass** die Spulen in nichtmagnetischen kanalförmigen Trägern (8) aufgenommen sind.

8. Verfahren zur zerstörungsfreien Prüfung metallischer Werkstücke auf Oberflächenfehler mittels eines Magnetpulverprüfverfahrens mittels einer Vorrichtung nach Anspruch 1.

## Claims

1. Device for non-destructive testing of metallic workpieces for surface defects by means of a magnetic powder method, in which a magnetic powder-containing medium is applied to the surface of the workpiece (4) and, during a magnetisation of the workpiece by means of electric coils (1, 2), the distribution of the magnetic powder at imperfections of the workpiece is determined, wherein the first and second coils (1,2) whose axial planes are at an angle of 90° to one another surround the workpiece each in the form of rings and bring about the magnetisation, and wherein the axial directions of the coils in relation to the direction of travel (5) of the workpiece passing through are respectively at an angle of 45°, and a third coil has an axial direction normal to the plane of the axes of the first and second coils (1, 2), wherein the third coil is divided into a first (3) and a second (6) part coil, which are arranged at a distance and parallel to each other, so that a workpiece can be passed through a clear opening of the first and second coils (1,2), nested in the form of a cross, and between the two part coils (3, 6) parallel to and at a distance from one another, and wherein the first and second coils (1, 2) are each connected to a phase of a three-phase transformer (7) and the part coils (3, 6) are connected in series to the third phase of the transformer.

2. Device according to claim 1, **characterised in that** the coils each have an octagonal or circular shape.

3. Device according to claim 2, **characterised in that** the first and second part coils (3, 6) each contain one to three windings.

4. Device according to claim 1, **characterised in that** the first and second part coils each overlie the intersection region of the first and second coils from the outside or the inside.

5. Device according to one or more of the preceding claims, **characterised in that** the inside diameter of the first and second part coils is chosen to be large enough for the part coils (3, 6) can be moved in their axial direction over the first and second part coils and thus, with relatively flat workpieces (4) to be tested, can be guided close to the surface of the workpiece.

6. Device according to claim 1, **characterised in that** the first and second coils (1, 2), arranged in the shape of a cross, can be moved in in relation to one another in their axial direction.

7. Device according to one or more of the preceding claims, **characterised in that** the coils are in housed in non-magnetic channel-shaped carriers (8).

8. Method for non-destructive testing of metallic workpieces for surface defects by means of a magnetic powder method by means of a device according to claim 1.

## Revendications

1. Dispositif pour le contrôle non destructif de pièces métalliques pour rechercher des défauts de surface à l'aide d'un procédé par poudre magnétique selon lequel un produit contenant de la poudre magnétique est appliqué sur la surface de la pièce (4), et en présence d'une magnétisation de la pièce à l'aide de bobines électriques (1, 2) la répartition de la poudre magnétique au niveau de défauts de la pièce est déterminée, les première et deuxième bobines (1, 2) disposées suivant un angle de 90° l'une par rapport à l'autre dans leur plan axial entourant chacune la pièce suivant une forme annulaire et provoquant la magnétisation, et les directions axiales des bobines s'étendant chacune à 45° par rapport au sens de passage (5) de la pièce qui traverse lesdites bobines, et une troisième bobine s'étendant avec sa direction axiale normale par rapport au plan des axes des première et deuxième bobines (1, 2), la troisième bobine étant divisée en une première (3) et une seconde (6) partie qui sont espacées et parallèles, de sorte qu'une pièce peut passer à travers une ouverture libre des première et deuxième bobines (1, 2) emboîtées en forme de croix et entre les deux parties de bobine (3, 6) parallèles, et les première et deuxième bobines (1, 2) étant raccordées chacune à une phase d'un transformateur triphasé (7) tandis que les parties de bobine (3, 6) sont raccordées en série à la troisième phase du transformateur.

2. Dispositif selon la revendication 1, **caractérisé en ce que** les bobines présentent chacune une forme octogonale ou circulaire.

3. Dispositif selon la revendication 2, **caractérisé en ce que** les première et deuxième parties de bobine (3, 6) contiennent chacune une à trois spires.

4. Dispositif selon la revendication 1, **caractérisé en ce que** les première et deuxième parties de bobine couvrent chacune la zone de croisement des première et deuxième bobines, du côté extérieur ou intérieur.

5. Dispositif selon l'une au moins des revendications précédentes, **caractérisé en ce que** le diamètre libre choisi pour les première et deuxièmes parties de bobine est suffisamment grand pour que lesdites parties de bobine (3, 6) puissent être déplacées dans leur direction axiale au-dessus des première et deuxième parties de bobine et, en présence de pièces à contrôler (4) relativement plates, puissent ainsi être amenées près de la surface de la pièce.

6. Dispositif selon la revendication 1, **caractérisé en ce que** les première et deuxième bobines (1, 2) disposées en croix sont aptes à être déplacées l'une par rapport à l'autre dans leur direction axiale.

7. Dispositif selon l'une au moins des revendications précédentes, **caractérisé en ce que** les bobines sont logées dans des supports non magnétiques en forme de canaux (8).

8. Procédé pour le contrôle non destructif de pièces métalliques pour rechercher des défauts de surface à l'aide d'un procédé par poudre magnétique à l'aide d'un dispositif selon la revendication 1.
